# EUROPÄISCHE PATENTANMELDUNG

(11) **EP 1 034 874 A1**
(43) Veröffentlichungstag der Anmeldung: **13.09.2000**
(21) Anmeldenummer: 00104612.7
(22) Anmeldetag: 03.03.2000
(51) Int. Cl.: B23K 20/02, B23K 1/00, F16B 11/00

(54) **Verfahren zur Herstellung eines metallischen Schichtenverbundwerkstoffes**

(30) Priorität: 12.03.1999 DE 19911187
(71) Anmelder: DaimlerChrysler AG, 70567 Stuttgart (DE)
(72) Erfinder: Hermann, Lothar, 88483 Burgrieden (DE); Ziegler, Ernst, 89610 Oberdischingen (DE)

(57) **Zusammenfassung**

Die Erfindung betrifft ein Verfahren zur Herstellung eines metallischen Schichtverbundwerkstoffes. In vier Arbeitsschritten werden die einzelne metallische Komponenten des Schichtverbundwerkstoffes die aus dünnen Bahnen bestehen ganz oder teilweise verzinnt. Anschließend werden die Komponenten mit einem Flußmittel versehen um abschließend gestapelt und in einer konventionellen Multilayer-Presse gefügt zu werden.

## Beschreibung

Die Erfindung betrifft ein Verfahren zur Herstellung eines metallischen Schichtverbundwerkstoffes nach dem Oberbegriff des Patentanspruches 1.

Metallische Schichtverbundwerkstoffe bestehen aus mehreren miteinander verbundenen Metallschichten, die als Komponenten bezeichnet werden. Hergestellt werden metallische Schichtverbundwerkstoffe vorwiegend durch Verfahren, bei denen die einzelnen Metallschichten in fester Phase miteinander unter erhöhter Temperatur durch Druck verbunden werden, wobei jede Schichtkomponente ihre ursprünglichen Eigenschaften behält. Solche Verfahren sind das Preßschweißen, das Walzplattieren und das Sprengplattieren. In neuerer Zeit wird, insbesondere bei kompliziert geformten Bauteilen, das heißisostatische Pressen zur Herstellung von metallischen Schichtverbundwerkstoffen angewendet.

Ein solches Verfahren wird in der Schrift EP 0383 103 beschrieben. Hierbei werden die Metallkomponenten mit einer gasdichten verformbaren Hülle umgeben und so bei so hoch gewählten Temperaturen, daß eine ausreichende Diffusion der Komponenten ineinander eintreten kann, durch die Außenwand der Hülle einwirkende Gase hohen Drucks miteinander verbunden (diffusionsverschweißt).

Die Schrift DE 197 10 783 beschreibt ein Verfahren zur Herstellung eines Kühlkörpers der als komplexer metallischer Schichtverbundwerkstoff realisiert ist. Er besteht aus dünnen Platten oder Folien aus Metall die durch Diffusions-Bonden oder der Direct-Copper-Bond-Technology (DCB-Verfahren) miteinander verbunden werden. Beim Diffusions-Bonden müssen die vorgeschwärzten und aufgerauten Metallkomponenten bei Temperaturen über 1000°C verpreßt werden. Die bekannten Verfahren zur Herstellung eines metallischen Schichtverbundwerkstoffes sind durch die Notwendigkeit aufwendiger Fertigungsschritte (Aufbringen einer gasdichten Hülle, schwärzen der Metallkomponenten) auch durch die hohe Temperatur bei der Verpressung für viele Anwendungsfälle unwirtschaftlich. Dies ist insbesondere der Fall, wenn der Werkstoff nach seiner Herstellung keinen hohen mechanischen und thermischen Belastungen ausgesetzt ist, wie dies z.B. bei einem Kühlkörper in der Elektronikindustrie der Fall ist.

Aufgabe der Erfindung ist es ein kostengünstiges Verfahren zur Herstellung eines metallischen Schichtverbundwerkstoffes aufzuzeigen, welches nur wenige Arbeitsschritte und eine niedrige Prozesstemperatur bei der Verpressung benötigt.

Die Aufgabe wird durch ein Verfahren zur Herstellung eines metallischen Schichtverbundwerkstoff es gelöst, bei welchem die einzelnen Komponenten des Werkstoffes aus dünnen, metallischen Bahnen bestehen, die ganz oder teilweise verzinnt werden und bei welchem diese so verzinnten Komponenten mit Flußmittel versehen und in einem abschließenden Arbeitsgang in einer Multilayer-Presse miteinander verbunden werden.

Die Erfindung adaptiert das Verfahren zur Herstellung von mehrlagigen Leiterplatten auf den Zweck der Herstellung eines metallischen Schichtverbundwerkstoff. Diese Lösung ist für den Fachmann nicht naheliegend, da das Verfahren der Herstellung von mehrlagigen Leiterplatten nicht auf die Herstellung eines speziell geformten Körpers, sondern auf eine gedrängte Packung von elektrischen Leiterbahnen abzielt. Hierbei sollen mehrere dünne, in Kupferplatten geätzte Leiterbahnen isoliert voneinander dicht aufeinander gepackt werden. Zur Isolation der einzelnen leitenden Schichten voneinander und zur mechanischen Versteifung des so entstehenden mehrschichtigen Werkstoffes werden hier im allgemeinen Lagen aus Epoxidharz-Glasfilamentgewebe zwischen den einzelnen metallischen Lagen eingebracht. Bei der erfindungsgemäßen Herstellung des metallischen Schichtverbundwerkstoffes ist eine Trennung der metallischen Lagen voneinander nicht notwendig. Das Verfahren eignet sich deshalb auch in besonderer Weise bei der Herstellung von Schichtverbundwerkstoffen bei welchem, z.B. aus Gründen der Wärmeleitung, eine Trennung der metallischen Lagen gar nicht erwünscht ist. Der durch das Verfahren entstandene Schichtverbundwerkstoff ist denn auch in sich selbst stabil und benötigt keine zusätzlichen Versteifungen.

Das Verfahren zur Herstellung des metallischen Schichtverbundwerkstoff es läßt sich im wesentlichen in 4 Arbeitsschritte gliedern. Im ersten Schritt werden zum Beispiel durch Stanzen oder Ätzen die einzelnen Metallkomponenten in gewünschter Ausbildung erzeugt. Es ist hierbei denkbar, daß die Metallkomponenten so geformt werden, daß sie im Verbund einen schichtkörper bilden welcher Hohlräume aufweist. Im nachfolgenden Schritt werden die Metallkomponenten ganz oder partiell verzinnt. Der Zinnauftrag ist dahingehend zu dosieren, daß Hohlräume im herzustellenden Schichtverbundwerkstoff beim Preßvorgang nicht durch flüssiges Zinn in ihrer Form verändert werden können. Nach dem Verzinnen wird auf die Metallkomponenten Flußmittel aufgetragen. Im vierten Arbeitsschritt werden die einzelnen Metallkomponenten in eine Vorrichtung in der Mulitlayer-Presse gestapelt und in einem abschließenden Arbeitsschritt dort bei einer Temperatur die typischerweise um 200°C beträgt verpreßt. Hierbei können konventionelle Pressverfahren wie sie aus der Multilayer-Preßtechnik bekannt sind (Hanuschka M., Einführung in die Multilayer-Preßtechnik, Eugen G. Leutze Verlag, Saulgau/Württ., 1988) eingesetzt werden.

An Stelle des Zinnauftrags auf die metallischen Komponenten ist es auch denkbar andere Werkstoffe aufzutragen, welche für eine Fügung der Komponenten in einer Multilayer-Presse geeignet sind. Dies ist zum Beispiel Wärmeleitkleber, wobei hier der zusätzliche Arbeitsgang während welchem Flußmittel auf die Metallkomponenten aufgetragen wird entfällt. In jedem Fall gilt es zu beachten, daß der Auftrag des die metallischen Komponenten verbindenden Werkstoffes so dosiert vorgenommen wird, daß beim Preßvorgang eventuelle Hohlräume, welche im Schichtverbundwerkstoff erwünscht sein könnten, nicht verändert werden.

Bei der Herstellung eines metallischen Schichtverbundwerkstoffes der Hohlräume enthält welche von einem Medium durchflossen werden können, wie dies bei einem Kühlkörper der Fall ist, kann das Verfahren in vorteilhafter Weise dahingehend erweitert werden, daß in einem fünften Arbeitsschritt die Oberfläche des Werkstoffes gegen Korrosion in einem Tauchbad mit einem organischen Oberflächenschutz versehen wird (z.B.: ORGASOL SMT).

## Patentansprüche

1. Verfahren zur Herstellung eines aus metallischen Komponenten bestehenden metallischen Schichtverbundwerkstoffes, dadurch gekennzeichnet, daß die einzelnen metallischen Komponenten des Schichtverbundwerkstoffes aus dünnen Bahnen bestehen, die ganz oder teilweise mit einem Material beschichtet werden das in der Lage die metallischen Komponenten zu verbinden, und daß abschließend diese Komponenten in einer konventionellen Multilayer-Presse verbunden werden.

2. Verfahren nach Anspruch 1, dadurch gekennzeichnet, daß sich das Verfahren in 4 Arbeitsschritte gliedern läßt. Der erste Arbeitsschritt besteht in der Formung der Metallkomponenten durch Ätzen oder Stanzen. Im zweiten Arbeitsschritt werden die Metallkomponenten ganz oder teilweise verzinnt. Nachfolgend wird Flußmittel auf die Komponenten aufgetragen und abschließend werden diese geschichtet und in einer Multilayer-Presse bei Temperaturen zwischen 150°C und 250°C gefügt.

3. Verfahren nach Anspruch 1, dadurch gekennzeichnet, daß das die metallischen Komponenten verbindende Material wärmeleitfähig ist.

4. Verfahren nach Anspruch 3, dadurch gekennzeichnet, daß das die metallischen Komponenten verbindende Material Zinn ist.

5. Verfahren nach Anspruch 3, dadurch gekennzeichnet, daß das die metallischen Komponenten verbindende Material Wärmeleitkleber ist.

6. Verfahren nach Anspruch 4, dadurch gekennzeichnet, daß auf die verzinnten metallischen Komponenten vor dem Fügen in der Multilayer-Presse Flußmittel aufgetragen wird.

7. Verfahren nach einem der vorhergehenden Ansprüche, dadurch gekennzeichnet, daß die Oberfläche des Schichtverbundwerkstoffes mit einem organischen Oberflächenschutz versehen wird.
